**Europäisches Patentamt**

**European Patent Office**

**Office européen des brevets**

(19)

(11) Veröffentlichungsnummer: **0 017 007**
**A1**

(12) # EUROPÄISCHE PATENTANMELDUNG

(21) Anmeldenummer: **80101188.3**

(22) Anmeldetag: **08.03.80**

(51) Int. Cl.³: **G 01 N 21/53**

(30) Priorität: **31.03.79 DE 2912948**

(43) Veröffentlichungstag der Anmeldung: **15.10.80**
**Patentblatt 80/21**

(84) Benannte Vertragsstaaten: **AT BE CH FR GB IT LU NL SE**

(71) Anmelder: **Desitek Design und Vertrieb technischer Geräte GmbH, Eupener Strasse 74 Postfach 450308, D-5000 Köln 41 (DE)**

(72) Erfinder: **Palloks, Hans-Heinrich, 1720-13 Street S.W., Calqary Alberta T2T 3P4 (CA)**

(74) Vertreter: **Paul, Dieter-Alfred, Dipl.-Ing., Erftstrasse 82, D-4040 Neuss 1 (DE)**

(54) **Messeinrichtung für die Erfassung der Trübung insbesondere in Flüssigkeiten.**

(57) Bei einer nach der Streulicht-Methode arbeitenden Meßeinrichtung für die Erfassung der Trübung insbesondere in Flüssigkeiten, beispielsweise in Emulsionen wie Milch oder dergleichen, ist zumindest eine Lichtquelle (5) zum Einstrahlen in die Flüssigkeit und ein — oder auch mehrere — Lichtempfänger (6) zum Empfangen des durch die Lichteinstrahlung verursachten Streulichtes vorgesehen.

Zwecks Vergrößerung des Meßbereiches mit dem Ziel, auch hohe Konzentrationen nach der Streulicht-Methode meßtechnisch erfassen zu können, und zwecks Vermeidung von Verfälschungen der Meßanzeige durch Verschmutzungen und Beschädigungen der Lichtaustrittsflächen ist die Meßeinrichtung mit einer Lichtleiteroptik (7, 8, 9, 23) zum Einstrahlen des von der Lichtquelle (5) kommenden Lichtes in die Flüssigkeit und zum Empfang des Streulichtes und dessen Weitergabe an den Lichtempfänger (6) mit zumindest eng beieinander liegenden Lichteintritts- und Lichtaustrittsflächen versehen.

Patentanwalt Dipl.-Ing. Paul, Erftstr. 82, D-4040 Neuss 1

Erftstr. 82
D-4040 Neuss 1
Tel.: (02101) 27 32 32
Datum:

Mein Zeichen:
5 ap '80 654

Ihr Zeichen:

Desitek Design und Vertrieb technischer Geräte GmbH,
Eupener Str. 74, 5000 Köln 41

**Meßeinrichtung für die Erfassung der Trübung insbesondere in Flüssigkeiten**

Die Erfindung betrifft eine Meßeinrichtung für die Erfassung der Trübung insbesondere in Flüssigkeiten, beispielsweise in Emulsionen wie Milch oder dergleichen, nach der Streulicht-Methode, mit zumindest einer Lichtquelle zum Einstrahlen in die Flüssigkeit und einem - oder auch mehreren - Lichtempfänger zum Empfang des durch die Lichteinstrahlung verursachten Streulichtes.

Unter der Trübung von Flüssigkeiten versteht man die Verringerung deren Lichtdurchlässigkeit durch ungelöste Teilchen, beispielsweise Feststoffteilchen (Suspension) oder Kolloide wie beispielsweise Fett in Milch (Emulsion). Durch ihre meßtechnische Erfassung läßt sich beispielsweise die Verschmutzung einer Flüssigkeit oder der Fettgehalt von Milch feststellen. Hierfür sind im wesentlichen zwei Meßmethoden bekannt, nämlich die Durchstrahl-Methode und die Streulicht-Methode.

Bei der Durchstrahl-Methode wird mit einem Lichtstrahl in die zu messende Flüssigkeit eingestrahlt, wobei mittels eines der Lichtquelle genau gegenüberliegenden Lichtempfängers der Unterschied zwischen der eingestrahlten und der aufgefangenen Lichtmenge, also die Transmission der Flüssigkeit auf einer bestimmten Strecke, gemessen wird. Der Vorteil dieses Meßgerätes besteht darin, daß es auch bei großen Trübungen eingesetzt werden kann. Allerdings muß hierfür der Lichtweg entsprechend verkürzt werden, und zwar beispielsweise bei Milch auf weniger als 1mm. Selbst das reicht aber häufig nicht aus, so daß die Flüssigkeit vor der Messung verdünnt werden muß. Es versteht sich von selbst, daß dies umständlich ist und einer kontinuierlichen Messung von derartigen Flüssigkeiten im Wege steht.

Ein weiterer Nachteil ist die geringe Empfindlichkeit bei kleinen Trübungen, die sich auch durch große Lichtwege nur wenig verbessern läßt. Hinzu kommt, daß im ganzen Meßbereich kein linearer Zusammenhang zwischen Trübung und Anzeige besteht, was die Eichung der Meßeinrichtung erschwert. Schließlich kommt als Störfaktor hinzu, daß mit dieser Meßmethode auch die Färbung einer Flüssigkeit durch gelöste Stoffe als Trübung registriert wird, wodurch Meßverfälschungen entstehen.

Bei der Streulicht-Methode wird ebenfalls in die zu messende Flüssigkeit gebündeltes Licht eingestrahlt. Der Lichtempfänger ist aber im Gegensatz zur Durchstrahl-Methode meist im Winkel von $90^{\circ}$ zur Lichtquelle angeordnet. Demgemäß kann dieser Lichtempfänger nicht das direkt durchstrahlende Licht empfangen, sondern nur das rechtwinkelig an den Teilchen in der Flüssigkeit weggestreute Licht. Die Menge des aufgefangenen
Streulichtes ist dabei ein Maß für die Trübung der
Flüssigkeit, und zwar ist die empfangene Lichtmenge
umso größer, je größer die Trübung der Flüssigkeit
ist.

Derartige Streulicht-Meßgeräte, auch Nephelometer
genannt, zeichnen sich durch besonders große Empfindlichkeit bei geringen Trübungen aus. Sie haben bei
der Trübung Null eine eindeutige Null-Anzeige, die
bei zunehmender Trübung ansteigt. Der Anstieg erfolgt dabei bis kurz vor ein Maximum praktisch linear,
was die Eichung sehr erleichtert. Nach Erreichen des
Maximums fällt die Anzeige wieder ab. Dies hängt damit zusammen, daß zum einen weniger Licht die die
Streuung verursachenden Teilchen erreicht und zum
anderen die Streustrahlung selbst auf dem Weg zum
Lichtempfänger geschwächt wird. Neben der Linearität
der Anzeige besteht ein weiterer Vorteil der Streulicht-Methode darin, daß gelöste Stoffe, wie beispielsweise Farbstoffe, nicht als Trübung registriert
werden, so daß hierdurch die Meßergebnisse nicht beeinflußt werden.

Nachteilig bei den Nephelometern ist zum einen die
Tatsache, daß der Meßbereich auf den Bereich des linearen Anstieges bis zum Maximum beschränkt ist, grössere Trübungen also nicht mehr gemessen werden können.
Dem kann bis zu einem gewissen Maß durch Verkürzung
der Lichtstrecke Rechnung getragen werden, jedoch
nicht soweit, daß das Gerät für große Trübungen, wie
sie bei Milch oder Sahne auftreten, verwendet werden
kann. Außerdem besteht die Gefahr von Fehlanzeigen,
da wegen des absteigenden Zweiges der Meßkurve nach dem
Maximum ein Anzeigewert zwei Trübungswerte signalisieren kann. Es muß somit schon vor der Messung sichergestellt sein, daß die Trübung nicht den eigentlichen Meßbereich überschreitet.

Als ein für die praktische Verwendung besonders hinderliches Problem hat sich darüberhinaus die Empfindlichkeit gegen Verschmutzung und Verkratzen insbesondere im Bereich der Lichtquelle erwiesen. Hierdurch entsteht ein zusätzlicher Streulichtanteil, der auf direktem Wege den Lichtempfänger erreicht und dort eine von der tatsächlichen Trübung abweichende Anzeige verursacht. Man hat zwar versucht, dieses Phänomen durch die Kombination von mehreren Lichtempfängern zu beseitigen, was jedoch nur unvollkommen gelungen ist und zudem einen hohen meßtechnischen Aufwand erfordert.

Der Erfindung liegt somit die Aufgabe zugrunde, eine Meßeinrichtung der eingangs genannten Art so zu gestalten, daß mit ihr in erster Linie ein größerer Meßbereich erzielbar ist, so daß auch hohe Konzentrationen nach der Streulicht-Methode meßtechnisch erfaßt werden können. Ein weiteres Ziel der Erfindung besteht darin, Verfälschungen der Meßanzeige durch Verschmutzungen und Beschädigungen der Lichtaustrittsfläche wesentlich zu verringern und Zweideutigkeiten der Meßwertanzeige zu vermeiden.

Die Hauptaufgabe wird gemäß der Erfindung durch eine Meßeinrichtung gelöst, die durch eine Lichtleiteroptik zum Einstrahlen des von der Lichtquelle kommenden Lichtes in die Flüssigkeit und zum Empfang des Streulichtes und dessen Weitergabe an den Lichtempfänger mit zumindest eng beieinander liegenden Lichteintritts- und Lichtaustrittsflächen gekenn-

zeichnet ist. Dieser Maßnahme liegt die schon zur Erfindung gehörende Erkenntnis zugrunde, daß sich ein für die Messung insbesondere von hohen Trübungen erforderliches Küvettenvolumen auch dadurch verwirklichen läßt, daß vergleichsweise kleine Lichteintritts- und Lichtaustrittsflächen eng beieinanderliegend angeordnet werden. Hierdurch bildet sich ein sich entsprechend der jeweiligen Trübung selbst abgrenzendes Küvettenvolumen innerhalb eines größeren Flüssigkeitsvolumens, wobei mittels daran hinsichtlich ihrer Größe und ihres Abstandes angepaßten Lichteintritts- und Lichtaustrittsflächen auch hohe Trübungen gemessen werden können. Für diese Anpassung eignet sich erfindungsgemäß insbesondere eine Lichtleiteroptik, weil damit auch sehr kleine und eng beieinanderliegende Lichteintritts- und Lichtaustrittsflächen verwirklicht werden können, so daß ein entsprechend großer Meßbereich erzielbar ist.

Dabei haben Versuche ergeben, daß sich die obere Grenze der noch meßbaren Trübungen im wesentlichen umgekehrt proportional zur Summe der Durchmesser der Lichteintritts- und Lichtaustrittsflächen verhält, wobei von zwei nebeneinanderliegende Flächen ausgegangen wird. Daneben sind aber auch deren Abstand zueinander und deren Lichteintritts- und Lichtaustrittskegel von Bedeutung. Durch Verkleinerung des gemeinsamen wirksamen Durchmessers und durch Abstandsverringerung kann der Meßbereich bis zu sehr hohen Konzentrationen erweitert werden, wie sich durch entsprechende Versuche leicht ermitteln läßt. So sollte beispielsweise bei einer Trübung von 35 g/l $SiO_2$ bzw. 3,5 % Fettgehalt in homogenisierter Milch der wirksame Durchmesser kleiner als 3mm sein, um diese Trübung noch erfassen zu können. Weitere Beispiele für wesentlich höhere Trübungen sind in der Beschreibung zur Zeichnung enthalten.

Sofern die Lichtleiteroptik aus einem Gemisch von eng beieinanderliegenden Lichteintritts- und Lichtaustrittsflächen besteht, wie dies zum Beispiels bei sogenannten Y-Lichtleitern gegeben ist, muß als wirksamer Durchmesser der der von allen Einzelflächen eingenommenen Gesamtfläche angenommen werden. Stehen sich zwei Zeilen von Lichteintritts- und Lichtaustrittsflächen an ihren Längsseiten gegenüber, so ist die Summe der Durchmesser eines gegenüberliegenden Paares von Lichteintritts- und Lichtaustrittsflächen maßgebend. Wesentlich für den wirksamen Durchmesser ist immer, inwieweit zwei benachbarte Lichtaustritts- und Lichteintrittsflächen durch weitere, ebenfalls nahe beieinanderliegende Lichteintritts- oder Lichtaustrittsflächen beeinflußt werden.

Aufgrund der Tatsache, daß durch die erfindungsgemäße Lichtleiteroptik eine spezielle Meßküvette nicht mehr erforderlich ist, da sich ein entsprechendes Volumen in einer Flüssigkeit selbst bildet, kann die Meßeinrichtung in Form einer Meßsonde in die Flüssigkeit eingetaucht werden, und zwar auch im Flüssigkeitshauptstrom, so daß Abzweigungen für die bisher übliche Nebenstrommessung nicht erforderlich sind. Ein weiterer Vorteil der erfindungsgemäßen Meßeinrichtung besteht darüberhinaus in deren Meßverhalten. Wie bei allen Nephelometern hat die Meßeinrichtung eine definierte Null-Anzeige bei nicht vorhandener Trübung, von der sie bei zunehmender Trübung linear ansteigt, bis ein Maximum erreicht wird, das die obere Grenze des Meßbereiches bildet. Im Gegensatz zu den bekannten Nephelometern bleibt die Anzeige jedoch bei weiterem Ansteigen der Trübung auf diesem Maximum. Dies hängt damit zusammen, daß sich durch die höhere Trübung der Lichtweg automatisch selbst verkürzt, so daß die bei längeren Lichtwegen auftretenden Streulichtverluste vermieden werden. Dies hat den Vorteil, daß die Meßanzeige nicht zweideutig ist, da bis auf den Maximumwert jedem Anzeigewert eine bestimmte Trübung zugeordnet werden kann.

In Ausbildung der Erfindung ist vorgesehen, daß die Lichtleiteroptik aus wenigstens je einem Lichtleiter zur Lichtübertragung von der Lichtquelle zur Flüssigkeit und zur Streulichtübertragung von der Flüssigkeit zum Lichtempfänger besteht. Dabei ist es von besonderem Vorteil, wenn, wie die Erfindung ferner vorsieht, die freien Enden der Lichtleiter zumindest annähernd in der gleichen Ebene liegen. Auf diese Weise wird nur das von den Teilchen in der Flüssigkeit zurückgestahlte Streulicht gemessen. Dies hat den Vorteil, daß Verschmutzungen oder Verkratzungen der Lichtaustrittsfläche praktisch nicht mehr zu Fehlmessungen führen können, da das hierdurch verursachte Streulicht den Lichtempfänger nicht mehr direkt erreichen kann. Entsprechend geringe Wartungsansprüche stellt die so ausgebildete Meßeinrichtung.

Als Lichtleiter können Lichtleitfasern zur Anwendung kommen, bei denen es sich um sehr dünn ausgezogene Glasfäden handelt. Sie eignen sich für den erfindungsgemäßen Zweck besonders deshalb, weil hiermit Lichtaustritts- und Lichteintrittsflächen mit Durchmessern weit unter 1mm verwirklicht werden können. Entsprechend weit läßt sich der Meßbereich zu hohen Trübungen hin erweitern.

Hinsichtlich der Zahl und der Anordnung der Lichtleiter sind die verschiedensten Möglichkeiten denkbar. Eine dieser Möglichkeiten besteht darin, daß wenigstens zwei Bündel von Lichtleitern vorgesehen sind, die von der Lichtquelle und dem Lichtempfänger ausgehen und zum freien Ende hin ineinander willkürlich verschachtel bzw. vermischt sind. Eine derartige Ausbildung der Bündel ist im Handel als Y-Lichtleiter erhältlich. Um bei diesen Lichtleitern eine möglichst geringe Lichtaustritts- und Lichteintrittsfläche und damit einen großen Meßbereich zu verwirklichen, können aus den Bündeln Teilbündel mit wenigstens einem zur Lichtquelle und einem zum Lichtempfänger führenden Lichtleiter unter Ausblendung der übrigen Lichtleiter gebildet werden, wobei der Abstand dieser Teilbündel an deren freien Enden wenigstens das fünffache der wirksamen Durchmesser beträgt. Jedes Teilbündel sendet somit unabhängig von den anderen Teilbündeln Licht in die Flüssigkeit und nimmt das hierdurch verursachte Streulicht wieder auf. Auf diese Weise läßt sich ein größeres Meßvolumen verwirklichen, so daß örtliche Inhomogenitäten meßtechnich gemittelt werden.

Statt der willkürlichen Verschachtelung und Ausblendung der Lichtleiter kann das gleiche Ziel auch dadurch erreicht werden, daß mehrere Gruppen von Lichtleitern durch jeweils wenigstens einen zur Lichtquelle und einen zum Lichtempfänger führenden Lichleiter in einem Abstand zueinander angeordnet werden, der mehr als das fünffache ihrer wirksamen Durchmesser beträgt.

In weiterer Ausbildung der Erfindung ist vorgesehen, daß um das freie Ende eines von der Lichtquelle kommenden Lichtleiters mehrere zu dem Lichtempfänger führende Lichtleiter gruppiert sind. Durch diese Mehrfachanordnung von zum Lichtempfänger führenden Lichtleitern wird das Meßvolumen vergrößert, ohne daß hierdurch eine Verringerung des Meßbereiches eintritt.

Die Erfindung sieht ferner vor, daß die Lichtleiter
im Bereich ihrer freien Ende miteinander verschmolzen
sind. Auf diese Weise kann auf organische Bindemittel
in dem Bereich, der mit der Flüssigkeit in Berührrung
kommt, verzichtet werden. Dies macht die Meßsonde ausserordentlich temperaturunempfindlich, so daß Trübungsmessungen auch bei hoch erhitzten Flüssigkeiten vorgenommen werden können. Durch die Verschmelzung sind zudem die Abstände der Lichtleiter untereinander sehr
gering, so daß der Meßbereich entsprechend weit ist.
Die Anordnung kann dabei so getroffen sein, daß die
Lichtleiter in einem am freien Ende angeordneten
Lichtleiterblock mit verschmolzenen Lichtleitern bzw.
Lichtleitfasern und daran anschließenden, zur Lichtquelle bzw. zum Lichtempfänger führenden Lichtleitern
aufgeteilt sind, deren Anzahl wesentlich geringer als
die des Lichtleiterblockes ist. Durch diese Aufteilung werden im Lichtleiterblock nur die Lichtleiter
beaufschlagt, die in direkten Verlängerungen der von
der Lichtquelle kommenden oder zum Lichtempfänger gehenden Lichtleitern liegen. Im übrigen sind derartige
Lichtleiterblöcke mit Lichtleitern verschiedenen Durchmessers im Handel erhältlich.

Soll die Meßeinrichtung einen besonder großen Meßbereich aufweisen, so kann der Lichtleiterblock auch
zum freien Ende hin verjüngt ausgebildet werden, wodurch sich der Durchmesser der einzelnen Lichtleiter
zum freien Ende hin entsprechend verjüngt.

In einem weiteren Merkmal der Erfindung ist vorgesehen, daß die freien Enden der Lichtleiter mit einer dünnen Quarzschicht bedampft sind. Statt dessen kann auch eine dünne Kunststoffschicht, beispielsweise aus Tetrafluoräthylen oder Polysulfon, vorgesehen sein. Beide Schichten schützen die Enden der Lichtleiter vor chemischen Angriffen durch die Meßflüssigkeit oder durch Reinigungsflüssigkeit.

Lichtquellen verschiedener Wellenlängen können bei der erfindungsgemäßen Meßeinrichtung dann zur Anwendung kommen, wenn zumindest zwei unabhängige Lichtquellen-Lichtempfänger-Paare vorgesehen sind. Hierdurch können bei gleichbleibender Teilchenzahldichte Teilchengrößenveränderungen erfaßt werden, da sich hierdurch das Verhältnis der Meßwerte der Lichtquelle-Lichtempfänger-Paare entsprechend ändert. So kann beispielsweise bei der Erfassung des Fettgehaltes in Milch eine Abweichung des Homogenisierungsgrades sofort erfaßt und beispielsweise durch ein Signal gemeldet werden.

Nach einem weiteren Merkmal der Erfindung ist die Meßeinrichtung durch zwei unabhängige Lichtquellen-Lichtempfänger-Paare gekennzeichnet, von denen die Lichtleiter eines dieser Paare hinsichtlich ihrer wirksamen Durchmesser und ihres Abstandes zueinander so bemessen sind, daß die oberen Grenzen ihres Meßbereiches wesentlich geringer als die des anderen Paares sind. Auf diese Weise ergibt sich für die Meßeinrichtung ein Meßbereich, bei dem die Eichkurve des Lichtquelle-Lichtempfänger-Paares mit den Lichtleitern größeren Durchmesser horizontal, also unabhängig von der Trübung, verläuft und bei dem die Eichkurve des Lichtquelle-Lichtempfänger-Paares mit den Lichtleitern kleineren Durchmessers noch linear ansteigend ist. Der Meßwert der erstgenannten Lichtquelle-Lichtempfänger-Paares

- 11 -

0017007

kann dabei als Indikator für Schmutzablagerungen auf den Lichtaustritts- und Lichteintrittsflächen verwendet werden. Darüberhinaus kann das Verhältnis der beiden Meßwerte gebildet werden, das dann unabhängig von der Verschmutzung ist, so daß eine automatische Korrektur der Anzeige erfolgt.

In der Zeichnung ist die Erfindung an Hand von Ausführungsbeispielen näher veranschaulicht. Es zeigen:

Fig. 1    eine Meßsonde zur Erfassung von Trübungen in Flüssigkeiten im Längsschnitt;

Fig. 2    die Meßsonde gemäß Fig. 1 im Querschnitt;

Fig. 3    eine geänderte Ausführungsform der Meßsonde gemäß Fig. 1;

Fig. 4    ein vergrößerter Längsschnitt des Meßsondenkopfes gemäß Fig. 1 und

Fig. 5    ein Diagramm der Eichkurven der Meßsonden gemäß Fig. 1 und Fig. 3.

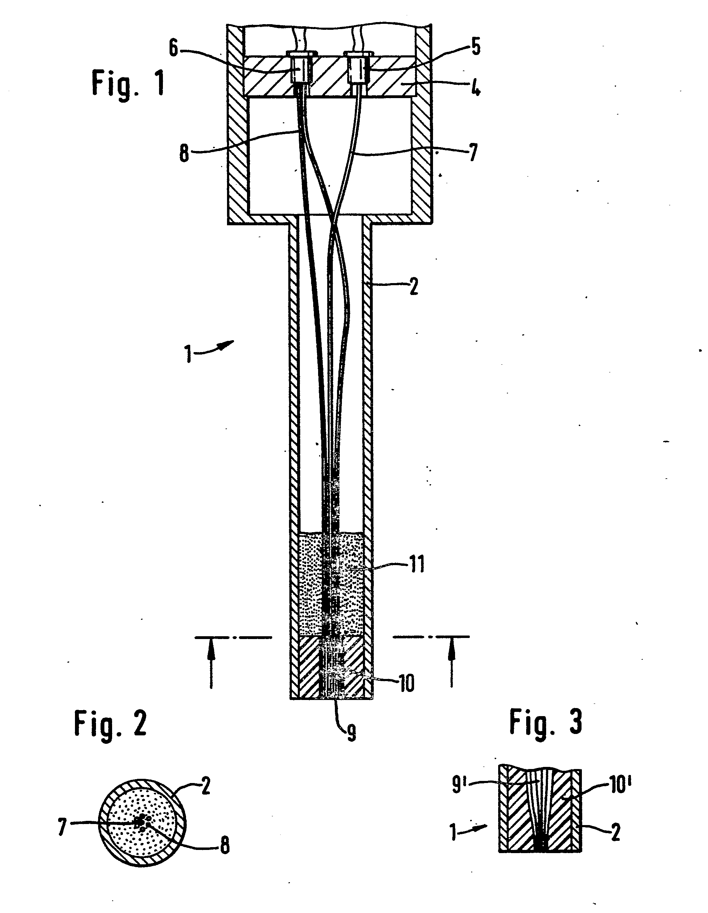

Figur 1 zeigt in einer schematischen Darstellung eine Meßsonde 1 einer Meßeinrichtung zur Erfassung der Trübung in Flüssigkeiten. Sie weist ein äußeres Schutzrohr 2 auf, das nach oben hin stufenförmig erweitert ist. In diesem erweiterten Teil ist eine Halteplatte 4 eingesetzt, in der eine Leuchtdiode 5 als Lichtquelle und eine Fotozelle 6 als Lichtempfänger eingebaut sind.

Von der Leuchtdiode 5 und der Fotozelle 6 führen je ein Lichtleitfaserstrang 7, 8 durch das Schutzrohr 2 herunter und treffen an ihren unteren Enden auf einen

0017007

Lichtleitfaserblock 9, der aus einer Vielzahl von einzelnen, jedoch zusammengeschmolzenen Lichtleitfasern besteht. Dieser Lichtleitfaserblock 9 ist in einem Teflonring 1o gehalten, der in das Ende des Schutzrohres 2 eingesetzt ist. Oberhalb des Teflonringes 1o ist der Hohlraum im Schutzrohr 2 mit einer Vergußmasse 11, beispielsweise Araldit, gefüllt.

Die so ausgebildete Meßsonde kann an beliebiger Stelle in eine Flüssigkeit eingetaucht werden, um deren Trübung festzustellen. Dabei kann die Trübung ein Maß für die Verschmutzung einer Flüssigkeit oder, wenn es sich um Milch oder Sahne handelt, für deren Fettgehalt sein. Hierzu wird die Leuchtdiode 5 zur Erzeugung eines monochromatischen Lichtstrahles eingeschaltet. Ein Teil dieses Lichtes pflanzt sich im daran anschließenden Lichtleitfaserstrang 7, der hier nur aus einer einzelnen Lichtleitfaser besteht, nach unten hin fort und tritt dann in den Lichtleitfaserblock 9 ein, der aus wesentlich dünneren Lichtleitfasern gebildet wird. Auch hier setzt sich der Lichtstrahl nur in den sich direkt an den Lichtleitfaserstrang 7 anschließenden Einzelfasern fort.

Am freien unteren Ende des Lichtleitfaserblockes 9 tritt der Lichtstrahl in die Flüssigkeit ein, wobei er sich kegelförmig erweitert. An den die Trübung verursachenden Teilchen in der Flüssigkeit entsteht Streulicht, das auch in Richtung auf die Meßsonde 1 zurückstrahlt. Dieser Anteil des Streulichtes fällt wieder in den Lichtleitfaserblock 9 ein und gelangt so zu dem Lichtleitfaserstrang 8. Dieser besteht im vorliegenden Beispiel aus sechs einzelnen Lichtleitfasern, die im Bereich des Überganges zum Lichtleitfaserblock 9 um den Lichtleitfaserstrang 7 gruppiert sind. Die Lichtstrahlen gelangen dann über die sechs Einzelfasern zu der Fotozelle 6, die die Lichtintensität mißt und an eine Auswerteeinrichtung mit einem Instrument zur Anzeige der Trübung weitergibt.

Figur 2 zeigt die Meßsonde in einem Querschnitt kurz oberhalb des Lichtleitfaserblockes 9 in Fig. 1. Innerhalb des Schutzrohres 2 ist die Verteilung der Einzelfasern der Lichtleitfaserstränge 7 und 8 zu erkennen.

In der Mitte verläuft der als Einzelfaser ausgebildete Lichtleitfaserstrang 7, der von der Leuchtdiode 5 kommt und von den sechs Einzelfasern des Lichtleitfaserstranges 8 umgeben ist. Die Abstände zwischen den Einzelfasern der Lichtleitfaserstränge 7, 8 sind dabei möglichst gering, damit sich die Lichtaustritts- und Lichteintrittskegel am freien Ende der Lichtleitfaserblockes 9 möglichst früh überschneiden, damit auch hohe Trübungsgrade gemessen werden können.

Figur 3 zeigt eine modifizierte Formgebung des unteren Teiles der Meßsonde 1. Der Lichtleitfaserblock 9' ist hier zum freien Ende hin verjüngt ausgebildet. Auf diese Weise verringern sich sowohl die Durchmesser als auch die gegenseitigen Abstände der Einzelfasern, so daß die Lichtaustritts- und die Lichteintrittsflächen und deren Abstände zueinander ebenfalls verkleinert werden . Hierdurch kann der Meßbereich erheblich zu höheren Trübungen hin erweitert werden, so daß auch ausgesprochen trübe Suspensionen oder Emulsionen wie Milchprodukte hohen Fettgehaltes wie Sahne ohne Verdünnungsmaßnahmen direkt meßtechnisch erfaßt werden können.

- 14 -

0017007

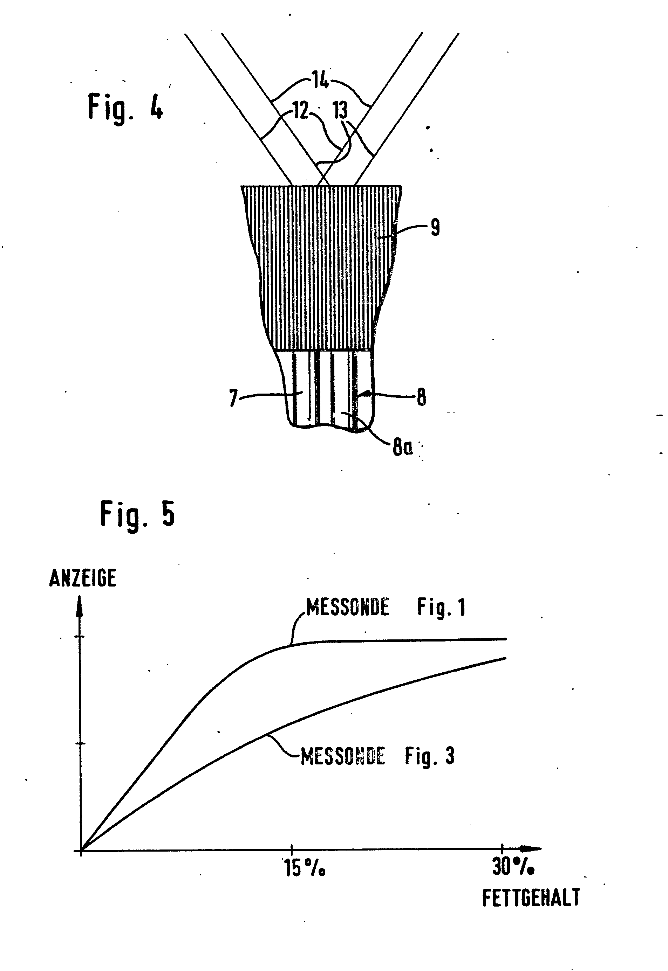

Figur 4 zeigt in einer stark vergrößerten Darstellung einen Ausschnitt aus dem Lichtleitfaserblock 9 gemäß Figur 1, und zwar im wesentlichen die Fortsetzung des Lichtleitfaserstranges 7 und eine der den Lichtleitfaserstrang 8 bildenden Lichtleitfaser 8a. Der erstgenannte Lichtleitfaserstrang 7 strahlt im Meßbetrieb das von der Leuchtdiode 5 kommende Licht in den Lichtleitfaserblock 9, das diesen in einem Austrittskegel 12 verläßt. Hierdurch entsteht innerhalb des Austrittskegels 12 ein Streulichtfeld, das nach allen Seiten strahlt.

Die Fortsetzung der Lichtleitfaser 8a des Lichtleitfaserstranges 8 im Lichtleitfaserblock 9 weist einen dem Austrittskegel 12 entsprechenden Eintrittskegel 13 auf, innerhalb dessen das auf den Lichtleitfaserblock 9 gerichtete Streulicht empfangen wird und an die Fotozelle 6 weitergegeben werden kann. Austrittskegel 12 und Eintrittskegel 13 überschneiden sich dabei in einem Bereich 14, so daß das dort verursachte Streulicht in den Lichtleitfaserblock 9 einstrahlen kann und über die Lichtleitfaser 8a zur Fotozelle 6 gelangt. Die Intensität des Streulichtes ist umso größer, je mehr Streulicht verursachende Teilchen vorhanden sind und je trüber damit die Flüssigkeit ist.

Figur 5 zeigt eine graphische Darstellung von Meßergebnissen mit der Meßsonde 1 nach Figur 1 und der nach Figur 3. Die Messungen wurden in Sahne mit zunächst 30% Fettgehalt durchgeführt, die dann stufenweise mit Wasser verdünnt wurde. Die Lichtaustrittsfläche und die Lichteintrittsflächen der Meßsonde hatten dabei einen Durchmesser von o,5mm, während die entsprechenden Flächen nach Figur 3 durch die Verjüngung des Lichtleitfaserblockes 9' nur Durchmesser von o,2mm aufwiesen.

0017007

Aus der Graphik ist zu ersehen, daß die Meßsonde 1 nach Figur 1 einen geringeren Meßbereich aufweist, der bis etwa 15% Fettgehalt reicht, da dann das Maximum mit sich nicht mehr ändernden Anzeigewerten erreicht ist. Daher reagiert ihre Anzeige empfindlicher auf Änderungen des Fettgehaltes, so daß sie sich insbesondere für die Messung geringerer Fettgehalte bzw. Trübungen eignet. Durch Vergrößerung der Durchmesser der Lichtaustritts- und Lichteintrittsflächen läßt sich der Meßbereich bei steigender Empfindlichkeit noch weiter verkleinern.

Die Meßsonde mit den kleineren Lichtaustritts- und Lichteintrittsflächen hat demgegenüber eine flacheren Verlauf der Meßkurve, also eine geringere Anzeigeempfindlichkeit. Dafür ist ihr Meßbereich praktisch doppelt so groß und geht bis 30% Fettgehalt der Sahne. Mit einer weiteren Verkleinerung der Lichtaustritts- und Lichteintrittsflächen ließe sich noch ein wesentlich größerer Meßbereich bis hin zu sehr hohen Trübungen verwirklichen.

Die Graphik läßt somit erkennen, daß sich durch entsprechende Dimensionierung der Lichtleitfasersurchmesser und auch deren Abstand zueinander die Empfindlichkeit und der Meßbereich in sehr weiten Grenzen verändern lassen. Technische Schwierigkeiten ergeben sich hierdurch nicht, da Lichtleitfasern entsprechender Dimensionierung auf dem Markt zu erhalten oder doch ohne weiteres herzustellen sind.

Patentanwalt Dipl.-Ing. Paul, Erftstr. 82, D-4040 Neuss 1

Erftstr. 82
D-4040 Neuss 1
Tel.: (0 21 01) 27 32 32
Datum:

Mein Zeichen:
5 ap 80 654

Ihr Zeichen:

- 16 -

Desitek Design und Vertrieb technischer Geräte GmbH,
Eupener Str. 74, 5000 Köln 41

Meßeinrichtung für die Erfassung der Trübung in Flüssigkeiten

Patentansprüche

1. Meßeinrichtung für die Erfassung der Trübung insbesondere in Flüssigkeiten, beispielsweise in Emulsionen wie Milch oder dergleichen, nach der Streulicht-Methode, mit zumindest einer Lichtquelle zum Einstrahlen in die Flüssigkeit und einem - oder auch mehreren - Lichtempfängern zum Empfangen des durch die Lichteinstrahlung verursachten Streulichtes, gekennzeichnet durch eine Lichtleiteroptik (7, 8, 9, 23) zum Einstrahlen des von der Lichtquelle (5) kommenden Lichtes in die Flüssigkeit und zum Empfang des Streulichtes und dessen Weitergabe an den Lichtempfänger (6) mit zumindest eng beieinanderliegenden Lichteintritts- und Lichtaustrittsflächen.

2. Meßeinrichtung nach Anspruch 1, dadurch gekennzeichnet, daß die Lichtleiteroptik aus wenigstens je einem Lichtleiter (7, 8, 9, 23) zur Lichtübertragung von der Lichtquelle (5) zur Flüssigkeit und zur Streulichtübertragung von der Flüssigkeit zum Licht-

0017007

empfänger (6) besteht.

3. Meßeinrichtung nach Anspruch 2, dadurch gekennzeichnet, daß die freien Enden der Lichtleiter (7,8,9,23) zumindest annähernd in der gleichen Ebene liegen.

4. Meßeinrichtung nach einem der Ansprüche 1 bis 3, dadurch gekennzeichnet, daß die Lichtleiter als Lichtleitfasern (7, 8, 9, 23) ausgebildet sind.

5. Meßeinrichtung nach einem der Ansprüche 1 bis 4, dadurch gekennzeichnet, daß wenigstens zwei Bündel von Lichtleitern vorgesehen sind, die von der - bzw. den - Lichtquelle und von der - bzw. den - Lichtempfänger ausgehen und zum freien Ende hin ineinander willkürlich verschachtelt sind.

6. Meßeinrichtung nach Anspruch 5, dadurch gekennzeichnet, daß aus den Bündeln Teilbündel mit wenigstens einem zur Lichtquelle und einem zum Lichtempfänger führenden Lichtleiter unter Ausblendung der übrigen Lichtleiter gebildet sind, wobei der Abstand dieser Teilbündel an deren freien Enden wenigstens das fünffache des wirksamen Durchmessers beträgt.

7. Meßeinrichtung nach einem der Ansprüche 1 bis 4, dadurch gekennzeichnet, daß mehrere Gruppen von Lichtleitern jeweils wenigstens einen zur Lichtquelle und einen zum Lichtempfänger führenden Lichtleiter in einem Abstand zueinander angeordnet sind, der mehr als das fünffache ihres wirksamen Durchmessers beträgt.

8. Meßeinrichtung nach einem der Ansprüche 1 bis 7, dadurch gekennzeichnet, daß um das freie Ende eines von der Lichtquelle (5) kommenden Lichtleiters (7) mehrere zu dem Lichtempfänger (6) führende Lichtleiter (8) gruppiert sind.

9. Meßeinrichtung nach einem der Ansprüche 1 bis 8, dadurch gekennzeichnet, daß die Lichtleiter (9) im Bereich ihrer freien Enden miteinander verschmolzen sind.

1o. Meßeinrichtung nach Anspruch 9, dadurch gekennzeichnet, daß die Lichtleiter in einem am freien Ende angeordneten Lichtleiterblock (9) mit verschmolzenen Lichtleitern bzw. Lichtleitfasern (9a, 9b) und daran anschließenden zur Lichtquelle (5) bzw. zum Lichtempfänger (6) führenden Lichtleitern (7,8) aufgeteilt sind, deren Anzahl wesentlich geringer als die des Lichtleiterblocks (9) ist.

11. Meßeinrichtung nach Anspruch 1o, dadurch gekennzeichnet, daß der Lichtleiterblock (9') zum freien Ende hin verjüngt ist.

12. Meßeinrichtung nach einem der Ansprüche 1 bis 11, dadurch gekennzeichnet, daß die freien Enden der Lichtleiter (23) mit einer dünnen Quarzschicht bedampft oder mit einer dünnen Kunststoffschicht, beispielsweise Tetrafluoräthylen oder Polysulfon, versehen sind.

13. Meßeinrichtung nach einem der Ansprüche 1 bis 12, gekennzeichnet durch zumindest zwei unabhängige Lichtquelle-Lichtempfänger-Paar , deren Lichtquellen Licht verschiedener Wellenlängen ausstrahlen

0017007

14. Meßeinrichtung nach einem der Ansprüche 1 bis 14, gekennzeichnet durch zwei unabhängige Lichtquelle-Lichtempfänger-Paare, von denen die Lichtleiter eines dieser Paare hinsichtlich ihrer wirksamen Durchmesser und ihres Abstandes zueinander so bemessen sind, daß die obere Grenze ihres Meßbereiches wesentlich geringer als die des anderen Paares ist.

Fig. 1

Fig. 2

Fig. 3

0017007

Fig. 4

14

12  13

9

7

8

8a

Fig. 5

ANZEIGE

MESSONDE   Fig. 1

MESSONDE   Fig. 3

15%

30%

FETTGEHALT

Europäisches
Patentamt

**EUROPÄISCHER RECHERCHENBERICHT**

| | EINSCHLÄGIGE DOKUMENTE | | KLASSIFIKATION DER ANMELDUNG (Int Cl. 3) |
|---|---|---|---|
| Kategorie | Kennzeichnung des Dokuments mit Angabe, soweit erforderlich, der maßgeblichen Teile | betrifft Anspruch | |
| | US - A - 3 068 739 (J. HICKS et al.) <br> * Spalten 2-4,7,9; Figuren 1,3.,8 * <br> -- | 1-4 | G 01 N 21/53 |
| | US - A - 3 786 266 (C. REID et al.) <br> * Spalten 4,5; Figur 6 * <br> -- | 1,7 | |
| | GB - A - 1 054 767 (JOYCE, LOEBL & Cy) <br> * Seiten 2,3; Figur 1 * <br> -- | 1-5 | RECHERCHIERTE SACHGEBIETE (Int. Cl. 3) |
| | FR - A - 1 589 461 (THOMSON MEDICAL TELCO) <br> * Seiten 2,3; Figur 1 * <br> ---- | 1,2,4, 13 | G .01 N 21/47 <br> 21/51 <br> 21/53 <br> 21/85 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Den Haag | 09-07-1980 | BOEHM |